# EUROPEAN PATENT APPLICATION

(11) **EP 4 406 870 A1**
(43) Date of publication of application: **31.07.2024**
(21) Application number: 22872492.8
(22) Date of filing: 24.06.2022
(51) Int. Cl.: B65D 21/02, B65D 1/26

(54) **STACKABLE METAL CUP**

(30) Priority: 22.09.2021 JP 2021154411
(71) Applicant: Toyo Seikan Co., Ltd., Tokyo 141-8640 (JP)
(72) Inventor: MURASE, Takeshi, Yokohama-shi, Kanagawa 230-0001 (JP); SASAJIMA, Nobuhiro, Yokohama-shi, Kanagawa 230-0001 (JP); TANAKA, Shouta, Yokohama-shi, Kanagawa 230-0001 (JP); SATO, Erika, Yokohama-shi, Kanagawa 230-0001 (JP)
(74) Representative: J A Kemp LLP
(86) International application number: PCT/JP2022/025248
(87) International publication number: WO 2023/047735

(57) **Abstract**

In a stackable metal cup 20 with an upper end forming an opening and a hollow portion 10 leading to the opening being formed into a stackable size, the hollow portion 10 formed by a side wall 1 has a shape in which planes having similar shapes are continuous from the upper end to a lower end, and an irregularly shaped portion X forming a plane 15 having a dissimilar shape is provided in at least a portion of a height portion.

## Description

### Technical Field

The present invention relates to a stackable metal cup that can be stored stacked.

### Background Art

As a container having a cup shape and used for drinking or the like, a container made of paper or plastic has been widely used. Containers molded from these materials are light in weight and easy to mold, and thus are inexpensive and suitable for disposable applications. However, metal cups have been attracting attention from environmental viewpoints, such as the depletion of resources and waste problems in recent years. This is because the metal cup, compared with the cup made of paper or plastic, is high in strength and durability, is suitable for repeated use, and can significantly suppress the depletion of resources and the generation of waste.

However, the metal cup, being high in strength and unlikely to deform, lacks stackability. That is, to make a cup stackable, the cup should be configured with an inner diameter of an opening at an upper end larger than an outer diameter of a bottom portion, and a side wall portion that narrows into a tapered shape from the upper end to the bottom portion. However, with such a form, when the metal cup is stacked, an outer surface of the side wall of an upper cup is in close contact with an inner surface of the side wall of a lower cup, making it difficult to pull out the upper cup (that is, the stacked cup). As a result, the problem arises that a large force is required for the pulling, causing a printed surface formed on the outer surface of the side wall portion to get rubbed and blurred during the pulling, or the like. Paper or plastic cups do not present such a problem because the side walls of the cup can be easily deformed.

As metal cups in which problems such as described above are solved, Patent Documents 1 and 2 propose metal cups in which a step is formed on inner and outer surfaces of the side wall portion.

These metal cups are stacked by utilizing the step, and thus a gap is formed between the outer surface of the side wall of the upper cup stacked and the inner surface of the side wall of the lower cup holding the upper cup, significantly reducing the portion where the two are in close contact. Accordingly, the stacked cup is easily pulled out, and the stackability is considerably improved.

### Citation List

### Patent Literature

Patent Document 1: JP 2015-506842 A
Patent Document 2: JP 2020-508874 A

### Summary of Invention

### Technical Problem

However, even with a cup including a step such as described above, there is room for improvement in stackability. That is, even if the cup includes a step, the outer surface of the side wall of the upper cup stacked and the inner surface of the side wall of the lower cup below are in close contact at the portion where the step is formed, making the space below the bottom portion of the stacked cup a sealed space. This creates a pressure difference between this sealed space and an external space and, even if the close contact between the side wall portions is prevented, this internal/external pressure difference makes it difficult to pull out the upper cup stacked, resulting in a need for improvement. Further, the formation of a sealed space such as described above means that there is no place for air to escape, resulting in the problem of stacking difficulties.

Accordingly, an object of the present invention is to provide a metal cup that effectively prevents formation of a sealed space and is further improved in stackability.

### Solution to Problem

According to the present invention, provided is a stackable metal cup with an upper end forming an opening and a hollow portion leading to the opening being formed into a stackable size. The hollow portion formed by a side wall has a shape in which planes having similar shapes are continuous from the upper end to a lower end, and an irregularly shaped portion forming a plane having a dissimilar shape is provided in at least a portion of a height portion.

In the stackable metal cup of the present invention, the following aspects can be suitably applied.
(1) A difference between a roundness of the similar shapes and a roundness of the dissimilar shape is 0.2 or more.
(2) The irregularly shaped portion is formed in one or two or more portions.
(3) Given H as a height of the stackable metal cup, the irregularly shaped portion is formed in any region of an upper region H₁ having a height from a ground-contacting portion higher than 80% of the height H, an intermediate region H₂ having a height of 20 to 80% of the height H, and a lower region H₃ having a height lower than 20% of the height H.
(4) The side wall includes a curved portion (curvature part) continuous with the ground-contacting portion established when the stackable metal cup is set upright, and the irregularly shaped portion is formed in the curved portion.

### Advantageous Effects of Invention

In the stackable metal cup of the present invention, as in a typical stackable metal cup, an inner diameter of the upper end of the side wall forming the hollow portion (inner diameter of the opening) is set greater than an outer diameter of a lower end portion of the side wall and, when the metal cups are stacked, the upper cup enters and is held in the space of the lower cup. In addition to such basic features, the stackable metal cup has a remarkable feature in that, the hollow portion formed by an inner surface of the side wall includes, between regions in which similar planar shapes are continuous, a region having a dissimilar planar shape, that is, an irregularly shaped portion.

When the irregularly shaped portion having a dissimilar planar shape such as described above is present and the cup is stacked, at this irregularly shaped portion, an entire periphery of a horizontal surface thereof does not come into contact with the outer surface of the side wall of the stacked cup. Rather, invariably, only a portion of the horizontal surface having the dissimilar shape comes into contact with the outer surface of the side wall of the stacked cup. That is, a gap is invariably formed between the two cups. Accordingly, a sealed space is effectively prevented from being formed between the stacked cup and the outer cup holding the stacked cup.

The metal cup of the present invention is remarkably excellent in stackability, and not only facilitates stacking but also facilitates the pulling out of the stacked cup, effectively preventing damage to the printed surface caused by rubbing or the like during the pulling.

### Brief Description of Drawings

FIGS. 1(A) and 1(B) are schematic views each illustrating an example of a metal cup of the present invention, FIG. 1(A) being a side sectional view and FIG. 1(B) being a plan view.
FIG. 2 is a side sectional view illustrating a state in which the metal cup of FIGS. 1(A) and 1(B) are stacked.
FIG. 3 is a diagram illustrating a state of a horizontal plane having a dissimilar shape in an irregularly shaped portion in the stacked state of FIG. 2.

### Description of Embodiments

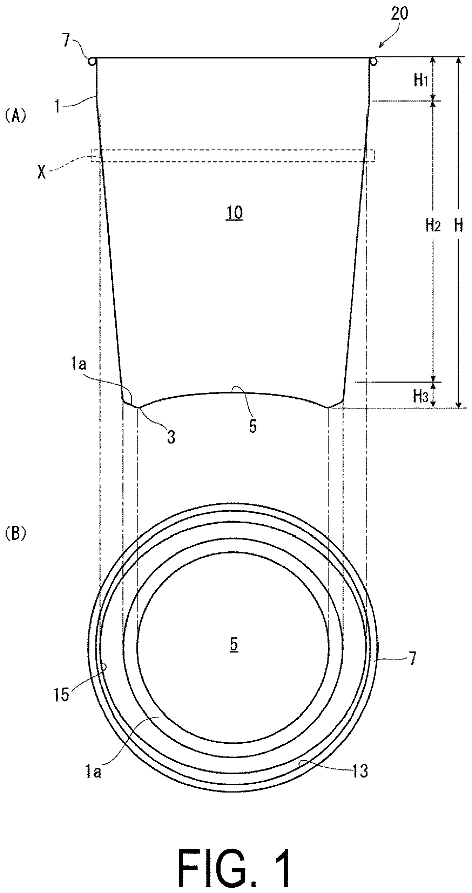

In FIGS. 1(A) and 1(B), a metal cup according to the present invention, denoted as a whole by reference sign 20, includes a side wall 1. Below the side wall 1, a ground-contacting portion 3, established when this cup 20 is set upright, is formed with a curved portion 1a having curvature interposed therebetween. A bottom portion 5 is interposed in the ground-contacting portion 3. The bottom portion 5 may be flat or, as illustrated in a side sectional view of FIG. 1(A), may be recessed in a dome shape. The mode of being recessed in a dome shape is preferable in terms of a stability and a buckling strength of the metal cup 20.

Further, a curled portion 7 is typically formed at an upper end of the side wall 1 so that a sharp portion is not formed.

In the metal cup 20 described above, naturally, a hollow portion 10 is formed by the side wall 1, and this hollow portion 10 is closed by the bottom portion 5 at a lower end and is open at an upper end. In such a metal cup 20, the hollow portion 10 formed by the side wall 1 has an opening diameter at the upper end (that is, an inner diameter at the upper end of the side wall 1) that is largest and decreases downwardly to ensure the stackability of the upper end. Planar shapes of such a hollow portion 10 are similar shapes in most portions, as understood from FIG. 1(B), and most portions are circular in the example in FIGS. 1(A) and 1(B). Further, an outer surface of the side wall 1 has a shape larger than the inner surface shape described above by an amount corresponding to a thickness thereof.

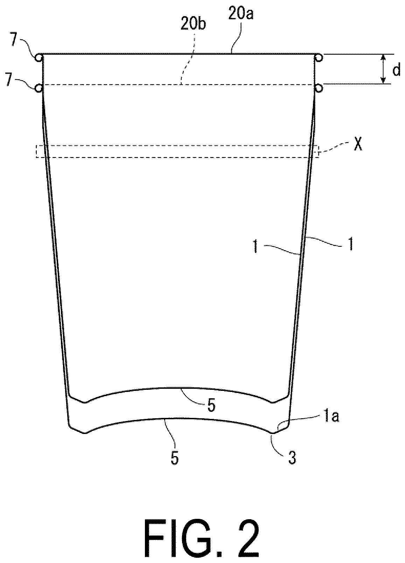

A state in which two of such metal cups 20 are stacked is illustrated in FIG. 2.

The side wall 1 forming the hollow portion 10 having such a horizontal planar shape as described above can be divided into three regions: an upper region H₁ having a height higher than 80% of a height H of the side wall 1 (length from the ground-contacting portion 3 to the upper end), an intermediate region H₂ having a height of 20 to 80% of the height H, and a lower region H₃ having a height lower than 20% of the height H (refer FIG. 1(A)).

First, in the upper region H₁, the side wall 1 is preferably configured with a vertical or nearly vertical angle of inclination. Thus, when the metal cup 20 is stacked, a height difference d of a certain degree or more can be ensured between an upper cup 20a that is stacked and a lower cup 20b, whereby the upper cup 20a that is stacked can be easily pulled out from the lower cup 20b.

Further, the lower region H₃ is a region including the curved portion 1a and, in this lower region H₃, the diameter of the sidewall 1 is set so as to facilitate stability when the metal cup 20 is set down and, at the same time, facilitate stacking. When the diameter of the side wall 1 is too small in this lower region H₃, stably setting the metal cup upright is difficult. When this diameter is too large, stacking the metal cup is difficult. That is, inserting the upper cup 20a into the lower cup 20b is difficult.

The intermediate region H₂ is a region in which the side wall 1 is reduced in diameter downwardly from above in such a manner that, to ensure that an outer appearance is not impaired, the sidewall 1 in the upper region H₁ and the sidewall 1 in the lower region H₃, set as described above, do not significantly change in shape.

As the metal material constituting a metal cup 20 such as described above, various metals or alloys thereof, such as steel, stainless steel, aluminum, or aluminum alloy, for example, are suitable, with aluminum or an alloy thereof being particularly suitable from the viewpoint of lightness and workability.

Further, such a metal cup 20 is formed by, for example, punching, drawing, and redrawing-ironing a thin plate made of metal, then doming the bottom portion, and subsequently performing washing and drying, outer surface printing, finishing varnish application and baking, inner surface coating application and baking, and curling. Furthermore, a shape of the side wall 1 can be adjusted by redrawing the plate a plurality of times.

In the present invention, as illustrated in FIG. 2, the side wall 1 is provided with an irregularly shaped portion X. As illustrated in FIG. 1(B), the planar shape (shape in a horizontal plane) at an upper end of the hollow portion 10 is a circle 13, whereas the planar shape of the irregularly shaped portion X is an elliptical shape 15 which is a dissimilar to the circle. With such an irregularly shaped portion X being provided, stackability can be improved.

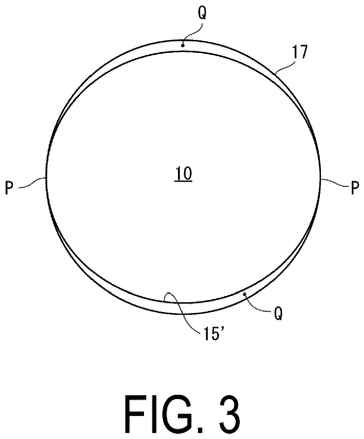

That is, when an irregularly shaped portion X such as described above is formed, in the irregularly shaped portion X of the stacked portion, an outer surface 15' having a dissimilar shape does not come into contact with a circular shape 17 of the inner surface of the lower cup 20b across the entire circumference thereof, but rather, for example, comes into contact at a portion P of the major axis and is not in contact with the circular shape 17 of the inner surface at other portions, thereby ensuring that a gap Q is invariably formed, as illustrated in FIG. 3. Such a gap Q serves as an air vent and prevents formation of a sealed space, making it possible to easily pull out the upper cup 20a that is stacked and easily insert the upper cup 20a into the hollow portion 10 of the lower cup 20b. Furthermore, when the upper cup 20a is pulled out, the rubbing of the outer surface of the sidewall 1 against the inner surface of the side wall 1 of the lower cup 20b is effectively avoided, making it possible to effectively avoid damage of the printed surface.

In the present invention, in a case in which the opening shape of the upper end of the hollow portion 10 is a circle, the horizontal planar shapes of the hollow portion 10 are circles having similar shapes except for a height portion of the irregularly shaped portion X. At this time, the elliptical shape 15 (15') formed by the irregularly shaped portion X is preferably as close to a perfect circle as possible and, for example, a roundness defined by (major diameter - minor diameter)/2 is preferably 0.1 or greater, particularly preferably within a range from 0.2 to 0.8. That is, when the roundness is too large, the gap Q described above is too large, and the cup 20a stacked is unstable, readily moves, and is readily damaged.

Furthermore, in the example of FIGS. 1(A) and 1(B) and FIG. 2, one irregularly shaped portion X is formed in the intermediate region H₂. However, a plurality of such irregularly shaped portions X may be provided. With formation of a plurality of such irregularly shaped portions X, the cup 20a stacked can be held in a stable and nearly upright state. Further, as for the location where the irregularly shaped portion X is formed, the upper region H₁ and the lower region H₃ are suitable, provided that the position is inside the lower cup 20b when stacked, in that the cup 20a stacked is stably held. Further, from the viewpoint of not impairing the outer appearance by formation of the irregularly shaped portion X, it is suitable to provide the irregularly shaped portion in the lower region H₃, particularly in the curved portion 1a.

In the present invention, given H as the height of the metal cup, preferably, in view of stackability, storability, and transportability, a maximum roundness of a region having a height from the ground-contacting portion 3 higher than 50% of the height H is larger by 0.3 or more compared with a minimum roundness of a region having a height lower than 50% of the height H.

Furthermore, the dissimilar shape of the irregularly shaped portion X is not limited to an ellipse, and may be a polygonal shape. The polygonal shape in this case is a shape inscribed in a circle, and preferably has a form (having a large number of corners) as close to a perfect circle as possible, as with the ellipse.

Furthermore, although the horizontal shape of the upper end opening is a circle in FIGS. 1(A) and 1(B) and the like, the shape may be a polygonal shape. In this case, the horizontal similar shapes of the hollow portion 10 are polygonal shapes, and the horizontal planar shape of the irregularly shaped portion X is dissimilar to this polygonal shape.

The dissimilar shape such as described above, including the ellipse, is difficult to form by re-drawing alone, and can be formed by a separate re-drawing process in which deformation and other processes are performed in addition to re-drawing.

The cup 20 of the present invention described above is excellent in stackability and can be stacked and held in large quantities, resulting in excellent storability, transportability, and the like and, for example, is suitably used as a container for drinking various beverages and suitably used for business use.

Further, although the curled portion 7 is formed at the upper end in the example described above, a horizontal flange or the like may be formed instead of the curled portion 7, and a lid member may be provided by heat sealing or the like for use after the accommodation of food or the like. In this case, the design is advantageous for storage when the cup, after use, is repeatedly used.

### Reference Signs List

1 Side wall
1a Curved portion
3 Ground-contacting portion
5 Bottom portion
7 Curled portion
10 Hollow portion
13 Circle of upper end opening
15 Dissimilar horizontal planar shape (ellipse) of irregularly shaped portion
X Irregularly shaped portion

## Claims

1. A stackable metal cup with an upper end forming an opening and a hollow portion leading to the opening being formed into a stackable size, wherein
the hollow portion formed by the side wall has a shape in which planes having similar shapes are continuous from the upper end to a lower end, and
an irregularly shaped portion forming a plane having a dissimilar shape is provided in at least a portion of a height portion.

2. The stackable metal cup according to claim 1, wherein
a difference between a roundness of the similar shapes and a roundness of the dissimilar shape is 0.2 or more.

3. The stackable metal cup according to claim 1, wherein
the irregularly shaped portion is formed in one or two or more portions.

4. The stackable metal cup according to claim 3, wherein,
given H as a height of the stackable metal cup, the irregularly shaped portion is formed in any region of an upper region H₁ having a height from a ground-contacting portion higher than 80% of the height H, an intermediate region H₂ having a height of 20 to 80% of the height H, and a lower region H₃ having a height lower than 20% of the height H.

5. The stackable metal cup according to claim 4, wherein
the side wall includes a curved portion continuous with the ground-contacting portion established when the stackable metal cup is set upright, and
the irregularly shaped portion is formed in the curved portion.
